# EUROPEAN PATENT APPLICATION

(11) **EP 2 141 575 A1**
(43) Date of publication of application: **06.01.2010**
(21) Application number: 09163575.5
(22) Date of filing: 24.06.2009
(51) Int. Cl.: G06F 3/048, H04M 1/725

(54) **Mobile terminal having touch screen and touch-based key input method for the same**

(30) Priority: 02.07.2008 KR 20080063877
(71) Applicant: Samsung Electronics Co., Ltd., Suwon-si, Gyeonggi-do (KR)
(72) Inventor: Lee, Sung Chan, Suwon-si, Gyeonggi-do (KR)
(74) Representative: Boakes, Jason Carrington

(57) **Abstract**

A mobile terminal having a touch screen and a touch-based key input method for the same are disclosed. The touch-based key input method includes steps of checking an input scheme supported by a selected application, reading a stored key information set when the supported input scheme is a keypad-based one, mapping key information to one or more areas of the touch screen using the read key information set, detecting a touch on one of the areas during execution of the selected application, determining a key mapped to the touched area, and performing an operation corresponding to the determined key.

## Description

### BACKGROUND OF THE INVENTION

### FIELD OF THE INVENTION

Exemplary embodiments of the present invention relate generally to a mobile terminal having a touch screen and, more particularly, to a mobile terminal having a touch screen that can receive a key input corresponding to a touch detected through the touch screen, and to a touch-based key input method for the same.

### DESCRIPTION OF THE BACKGROUND

A touch screen may include a display section and an input section as a single entity. Hence, a terminal equipped with a touch screen may not have to include a display section and an input section separately. Due to this advantage, touch screens are increasingly installed on small terminals such as mobile terminals.

With increasing number of mobile terminals having a touch screen, existing keypad-based input schemes are being replaced with touch-based input schemes. Because of incompatibility between the different input schemes, applications developed for mobile terminals employing an existing keypad-based input scheme may be not executable on mobile terminals having a touch screen.

In addition, for applications employing a keypad-based input scheme to be executable on mobile terminals having a touch screen, the applications may need to be modified. That is, without modification or redevelopment, applications employing a keypad-based input scheme may not be used in mobile terminals having a touch screen.

### SUMMARY OF THE INVENTION

Exemplary embodiments of the present invention have been made in view of the above problems, and provide a mobile terminal having a touch screen and a key input method for the same, wherein keys are input using key information mapped with touch detecting areas.

Additional features of the invention will be set forth in the description which follows, and in part will be apparent from the description, or may be learned by practice of the invention.

Exemplary embodiments of the present invention provide a touch-based key input method for a mobile terminal having a touch screen. The method comprises checking, when an application is selected, an input scheme supported by the selected application and reading, when the supported input scheme is a keypad-based input scheme, a stored key information set. The method further comprises mapping key information to one or more areas of the touch screen using the read key information set, detecting a touch on one of the areas during execution of the selected application, determining, upon detection of the touch, a key mapped to the touched area, and performing an operation corresponding to the determined key.

Exemplary embodiments of the present invention provide a mobile terminal, comprising a touch screen, a storage unit, and a control unit. The touch screen displays application details and senses a touch. The storage unit stores applications key information sets comprising mappings of key areas of the touch screen to key information. The control unit checks, when an application is selected, an input scheme supported by the selected application and reads, when the supported input scheme is a keypad-based input scheme, a key information set of the key information sets. The control unit maps key information to key areas of the touch screen using the read key information set, determines, upon detection of the touch of a key area of the touch screen, a key mapped to the touched key area, and performs an operation corresponding to the determined key.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1A is a block diagram of a mobile terminal according to exemplary embodiments of the present invention.

FIG. 1B is a block diagram of a display section of the mobile terminal illustrated in FIG. 1A.

FIG. 2 is a view of a touch screen with key areas mapped in one orientation based on key information according to exemplary embodiments of the present invention.

FIG. 3 is a view of the touch screen with key areas mapped with key information in another orientation according to exemplary embodiments of the present invention.

FIG. 4 illustrates subdivisions of a key area for touch detection according to exemplary embodiments of the present invention.

FIG. 5A, FIG. 5B, FIG. 5C, and FIG. 5D illustrate an application display field and application-specific key fields in the touch screen according to exemplary embodiments of the present invention.

FIG. 6 is a flow chart illustrating a touch-based key input method according to exemplary embodiments of the present invention.

FIG. 7 is a flow chart illustrating a touch-based key input method according to exemplary embodiments of the present invention.

FIG. 8 is a flow chart illustrating a procedure to recognize a key signal from a touch detected on the touch screen according to exemplary embodiments of the present invention.

### DETAILED DESCRIPTION OF ILLUSTRATIVE EMBODIMENTS

Hereinafter, exemplary embodiments of the present invention are described in detail with reference to the accompanying drawings. The same reference symbols are used throughout the drawings to refer to the same or like parts. Detailed descriptions of well-known functions and structures incorporated herein may be omitted to avoid obscuring the subject matter of the exemplary embodiments of the present invention.

Prior to explaining the exemplary embodiments of the present invention, relevant terminology will be defined for the description below.

An 'application' may refer to an application program running on a mobile terminal. An application may be any application executable on a mobile terminal, such as, for example, programs related to a game, a camera, MP3 audio, and document composition. An application may have input scheme information indicating a supported input scheme such as a keypad-based input scheme or a touch-based input scheme.

A 'keypad-based input scheme' may refer to an input technique generating an input key signal through a physical key of an input unit in a mobile terminal.

A 'touch-based input scheme' or 'touch screen-based input scheme' may refer to an input technique generating an input signal on the basis of a touch detected on a touch screen. The touch screen may include an input section to input various data and a display section to display various data in a single body.

A 'touch' may refer to a contact and release between a finger or stylus pen and a touch screen. A touch may correspond to a tap identified by a contact lasting for a given time duration and a subsequent release or to a flick identified by a contact moving in one direction and a subsequent release.

In the following description, exemplary embodiments of the present invention are described in detail with reference to the accompanying drawings.

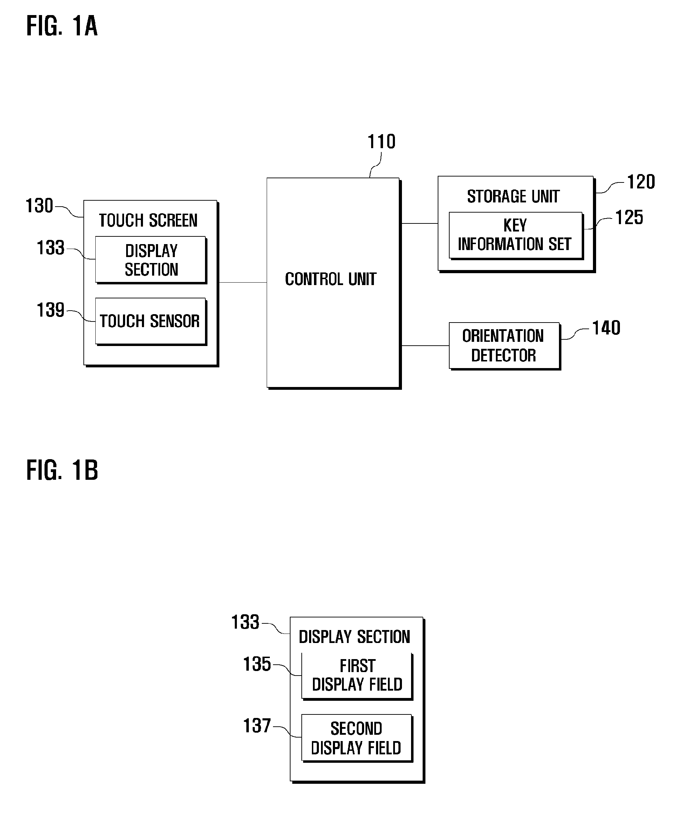

FIG. 1A is a block diagram of a mobile terminal according to exemplary embodiments of the present invention. FIG. 1B is a block diagram of a display section of the mobile terminal.

Referring to FIG. 1A, the mobile terminal may include a control unit 110, a storage unit 120, a touch screen 130, and an orientation detector 140.

The control unit 110 may control the overall state and operation of the mobile terminal. For example, when an application is selected by a user of the mobile terminal, the control unit 110 can check a given property of the selected application to determine whether the input scheme of the application is a keypad-based one or touch-based one. To identify the supported input scheme in the case of a JAVA application, the control unit 110 can check the 'Midxlet-touch' property of the application. If the 'Midxlet-touch' property is set to 'Yes' (e.g., touch = Yes), the control unit 110 can determine that the application be executed using a touch-based input scheme. If the 'Midxlet-touch' property is not present or is set to 'No' (e.g., touch = No), the control unit 110 can determine that the application be executed using a keypad-based input scheme.

If the application employs a keypad-based input scheme, the control unit 110 may read a key information set 125 from the storage unit 120, and may map key information to detecting key areas of the touch screen 130.

The control unit 110 may identify an orientation of the mobile terminal, read a key information set 125 corresponding to the identified orientation from the storage unit 120, and may map the key information to key areas of the touch screen 130. Hence, when a touch is detected on the touch screen 130 during execution of an application, the control unit 110 can identify a touched key area and may perform an operation according to key information mapped to the touched key area.

The storage unit 120 may store various applications executable on the mobile terminal, and may store various information generated during execution of the applications. For example, the storage unit 120 can store a key information set 125 including mappings between touch detecting key areas and key information. The key information set 125 stored in the storage unit 120 can contain information regarding identifiers (ID) of touch detecting key areas on the touch screen 130, key information mapped to the individual key areas, and types of touches. The key information set 125 may be prepared and stored in the storage unit 120 during the manufacturing process by the manufacturer of the mobile terminal, or may be set and stored by the user.

The touch screen 130 may include a display section 133 and a touch sensor 139. The display section 133 can display various information regarding states and operations of the mobile terminal. For example, the display section 133 can display information on an application being executed on the mobile terminal. As shown in FIG. 1B, the display section 133 may include a first display field 135 and a second display field 137 to display information related to, for example, a running application and key zones.

The touch sensor 139 may be integrated with the display section 133, and may sense a touch by detecting a contact and release between an object and the display section 133. The touch sensor 139 may extract coordinates of the touched location, and may send the extracted coordinates to the control unit 110.

The orientation detector 140 may identify the orientation (e.g., portrait, landscape or oblique) of the mobile terminal using a sensor, and may send the identified orientation to the control unit 110. The sensor may be an acceleration sensor, gyroscopic sensor, and/or image sensor. Details on the type of sensor or orientation-detection by the sensor are well-known in the art and will not be detailed further herein.

Although not shown, the mobile terminal may further include a camera unit for capturing an image, a communication unit for signal transmission and reception to and from a base station, and a digital multimedia broadcasting (DMB) receiver for digital broadcast reception. It should be understood that the mobile terminal may not be limited to the features discussed herein and may store and execute several other applications and features, such as the camera.

According to exemplary embodiments of the present invention, when an application is selected, the control unit 110 may determine whether the input scheme employed by the application is a keypad-based one or a touch-based one. If the application employs a keypad-based input scheme, the control unit 110 may read a key information set 125 from the storage unit 120 and may map the key information of the read key information set 125 to the key areas on the touch screen 130. When coordinates of the key area touched on the touch screen 130 are received, the control unit 110 may identify the touched key area using the received coordinates, and may perform an operation corresponding to the key information mapped to the identified key area.

In some cases, when an application employing a keypad-based input scheme is selected, the control unit 110 may demarcate the touch screen 130 into a first display field 135 to display details of the application and a second display field 137 to display key mapping areas for the application. When a key area on the second display field 137 is touched, the key mapped to the touched key area is input to the control unit 110.

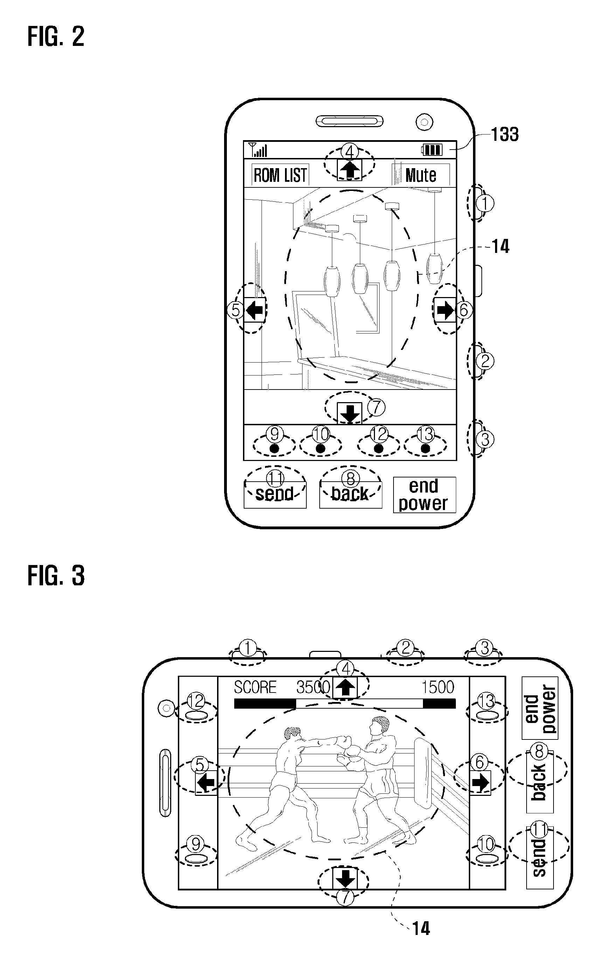

Next, a description is provided of mappings between key information and key areas on the touch screen 130 in connection with FIG. 2, FIG. 3, FIG. 4, and FIG. 5, where screen representations are depicted.

FIG. 2 is a view of the touch screen 130 with key areas mapped in one orientation based on key information according to exemplary embodiments of the present invention.

Referring to FIG. 2, a front view of the touch screen 130 of the mobile terminal in a portrait orientation is shown. A gaming application employing a keypad-based input scheme may be running on the display section 133. In FIG. 2, each area shown in dotted line and with a numeric label may be a key area mapped with a piece of key information. The numeric label assigned to an area is an ID of the area.

FIG. 3 is a view of the touch screen 130 with key areas mapped with key information in another orientation according to exemplary embodiments of the present invention.

Referring to FIG. 3, the touch screen 130 of the mobile terminal is in a front view and in a landscape orientation, and a gaming application employing a keypad-based input scheme is running on the display section 133. In FIG. 3, each area shown in a dotted line and with a numeric label is a key area mapped with a piece of key information. The numeric label assigned to an area is an ID of the area.

As illustrated in FIG. 2 and FIG. 3, key information can be mapped to the individual key areas of the touch screen 130 on the basis of a key information set 125 stored in the storage unit 120. For example, when an application employing a keypad-based input scheme is selected, the control unit 110 can read the key information set 125 from the storage unit 120 and may map the key information of the read key information set 125 to corresponding areas in the touch screen 130. The key information set 125 may be created and stored in the storage unit 120 during the manufacturing process by the manufacturer, or may be created and stored by the user. During the manufacturing process, the manufacturer may assign an ID to each key area (e.g., key areas 1-14 in FIG. 2 and FIG. 3) of the touch screen 130, may map key information to the assigned IDs, and may store the mappings between the IDs assigned to the key areas and the key information in the storage unit 120 as a key information set 125. Alternatively, in response to a request for setting the key information set 125, the control unit 110 may instruct the touch screen 130 to display key information assigned to a particular application. When the user touches a key area of the touch screen 130 and selects a piece of key information, the control unit 110 may identify the touched key area, assign an ID to the touched key area, and may map the assigned ID to the selected piece of key information. After completion of the key-to-key area mapping, the control unit 110 can store the mappings between the IDs assigned to the key areas and the key information in the storage unit 120 as a key information set 125.

TABLE 1 illustrates an example of a key information set 125. TABLE 1 shows a touch type and a corresponding mapped key. It should be understood that key information set 125 may, in general, be stored in any suitable format. Key information mapped to key areas may be used in a game mode, and may be different for different modes.

**TABLE 1**

| ID | TOUCH TYPE | MAPPED KEY |
|---|---|---|
| 1 | Tap | "0" Key |
| 2 | Tap | '*' Key |
| 3 | Tap | '#' Key |
| 4 | Tap | Up Key |
| 5 | Tap | Left Key |
| 6 | Tap | Right Key |
| 7 | Tap | Down Key |
| 8 | Tap | Clear Key |
| 9 | Tap | Left Soft Key |
| 10 | Tap | Right Soft Key |
| 11 | Tap | Call Key |
| 12 | Tap | '5' Key |
| 13 | Tap | Spare Key |
| 14 | Tap | Pire Key |
| 14-1 | ↖Flick | '1' Key |
| 14-2 | ↑ Flick | '2' Key |
| 14-3 | ↗ Flick | '3' Key |
| 14-4 | ← Flick | '4' Kay |
| 14-5 | → Flick | '6' Key |
| 14-6 | ↙ Flick | '7' Key |
| 14-7 | ↓ Flick | '8' Key |
| 14-8 | ↘ Flick | '9' Key |
| 14-9 | 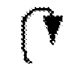 | Enlargement |
| 14-10 | 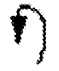 | Reduction |

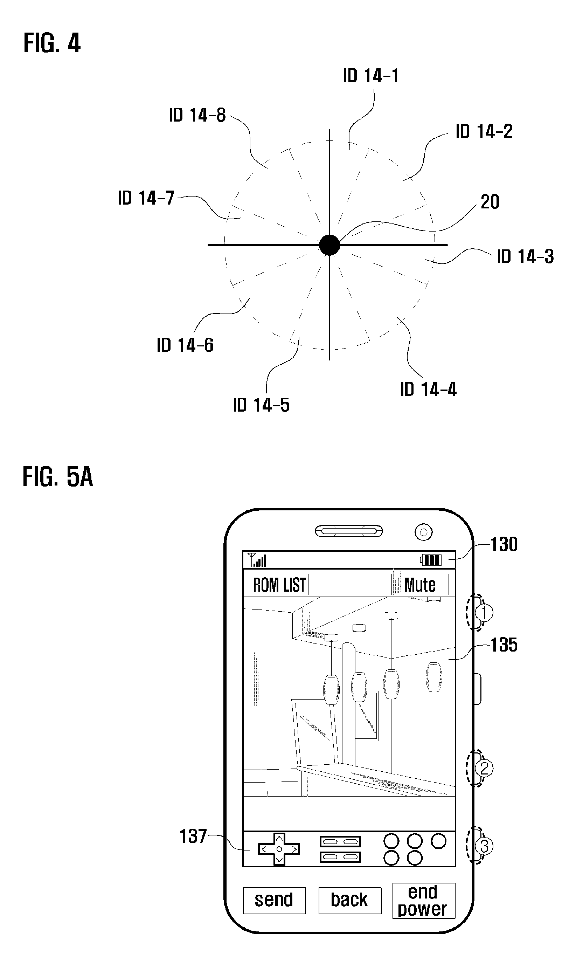

The key information set 125 illustrated in TABLE 1 may be described in connection with FIG. 2 and FIG. 3. The key information set 125 may include IDs assigned to key areas of the touch screen 130, keys mapped to the areas, and types of touches detectable at the key areas. In TABLE 1, keys mapped to key areas ID 1 to ID 13 may be fixed regardless of the touch types, and the key mapped to key area ID 14, mainly acting as a display field for a running application, may vary depending upon the touch type. A touch on the touch screen 130 may correspond to a tap or a flick. Key area ID 14 is described below in connection with FIG. 4.

FIG. 4 illustrates subdivisions of a key area for touch detection according to exemplary embodiments of the present invention.

Key area ID 14 can be divided into subareas ID 14-1 to ID 14-8, as shown in FIG. 4. The subareas may be centered not at a fixed location in key area ID 14 but at a touched location (e.g., location touched by a finger or stylus pen). The control unit 110 can identify the type of touch detected at key area ID 14 using subareas ID 14-1 to ID 14-8. That is, the control unit 110 can identify, relative to a reference point 20 where a contact is made and the subarea where a corresponding release is made. The control unit 110 may then determine the type of the touch detected on the touch screen 130 using the identified subarea, and find the key mapped to key area ID 14 from the key information set 125 using the determined touch type.

For example, when a contact is sensed at key area ID 14 of the touch screen 130, the control unit 110 may determine the contact point to be the reference point 20. When a release corresponding to the contact is sensed at key area ID 14, the control unit 110 may identify the release point. If the release point is equal to the reference point 20, the control unit 110 can regard the detected touch as a tap. If the release point is unequal to the reference point 20 and belongs to one of the subareas ID 14-1 to ID 14-8, the control unit 110 can regard the detected touch as a flick. The control unit 110 can determine the direction of a flick on the basis of the release point. When a contact, movement and release constituting a single touch are made across at least three ones of the subareas ID 14-1 to ID 14-8, the control unit 110 regards the touch as a mapped flick indicated by ID 14-9 or ID 14-10 in TABLE 1. Thereafter, the control unit 110 may find a key associated with the flick and direction thereof from the key information set 125.

Through use of the key information set 125, an application employing a keypad-based input scheme can be executed on the mobile terminal having a touch screen. For example, when a game application employing a keypad-based input scheme is selected by the user, the control unit 110 may read a corresponding key information set 125 from the storage unit 120, and may map key information to the key areas of the touch screen 130. Then, the control unit 110 may execute the selected game application, and may display details of the game application on the touch screen 130 as shown in FIG. 2 and FIG. 3. For example, when the user touches key area ID 7, the control unit 110 may identify the touched key area ID 7, and may perform an operation corresponding to the 'down' key mapped to the identified key area ID 7. As illustrated by key areas ID 4 to ID 7 in FIG. 2 and by key areas ID 4 to ID 7, ID 9 and ID 10 and ID 12 and ID 13 in FIG. 3, key information mapped to the key areas can be represented as images or icons according to the user's or manufacturer's settings.

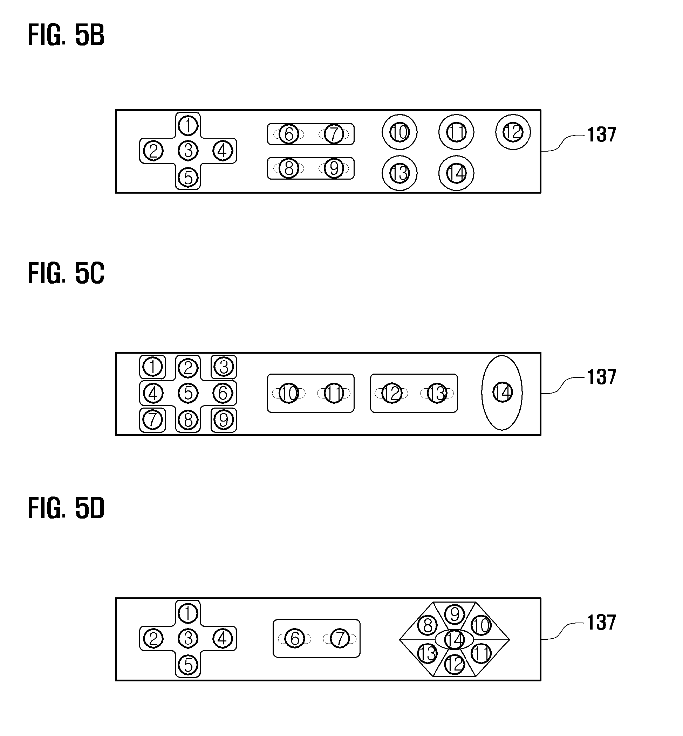

FIG. 5A, FIG. 5B, FIG. 5C, and FIG. 5D illustrate an application display field and application-specific key fields in the touch screen 130 according to exemplary embodiments of the present invention.

Referring to FIG. 5A, the touch screen 130 may include a first display field 135 for displaying details of a running application, and a second display field 137 for displaying key areas. As shown in FIG. 5B, FIG. 5C, and FIG. 5D, the key areas can be arranged in various manners in the second display field 137. Soft keys can be mapped to a key area, and a number of key areas displayable in the second display field 137 and a number of soft keys mapped to a key area can be set according to a selected application.

When IDs are assigned to key areas, a key information set 125 including mappings between key areas ID 1 to ID 14 and keys in relation to, for example, FIG. 5B, FIG. 5C, and FIG. 5D can be obtained as shown in TABLE 2. TABLE 2 shows key area IDS, with corresponding touch types and mapped keys.

**TABLE 2**

| ID | TOUCH TYPE | MAPPED KEY | | |
|---|---|---|---|---|
| | | FIG. 5B | FIG. 5C | FIG. 5D |
| 1 | Tap | Up and '2' Key | '1' Key | Up and '2' Key |
| 2 | Tap | Left and '4' Key | Up and '2' Key | Left and '4' Key |
| 3 | Tap | Center and '5' Key | '3' Key | Center and '5' Key |
| 4 | Tap | Right and '6' Key | Left and '4' Key | Right and '6' Key |
| 5 | Tap | Down and '9' Key | Center and '5' Key | Down and '8' Key |
| 6 | Tap | Left Soft Key | Right and '6' Key | Left Soft Key |
| 7 | Tap | Right Soft | Key '7' Key | Right Soft Key |
| 8 | Tap | '*' Key | Down and '8' Key | '*' Key |
| 9 | Tap | '#' Key | '9' | Key |
| 10 | Tap | '1' Key | '+' Key | '1' Key |
| 11 | Tap | '3' Key | '#' Key | '3' Key |
| 12 | Tap | '7' Key | Left Soft Key | '7' Key |
| 13 | Tap | '9' Key | Soft Key | '9' Key |
| 14 | Tap | '0' Key | '0' | Key |

The key information set 125 may be created and stored in the storage unit 120 during a manufacturing process by a manufacturer, or be created and stored by the user of the mobile terminal. For example, during the manufacturing process, the manufacturer may assign an ID to each key area of the second display field 137, may map key information to the assigned IDs, and may store the mappings between the assigned IDs and the key information in the storage unit 120 as a key information set 125. Alternatively, in response to a request for setting the key information set 125, the control unit 110 may instruct the touch screen 130 to display key information assigned to a particular application. When the user touches a key area of the second display field 137 and selects a piece of key information, the control unit 110 may identify the touched key area, assign an ID to the touched key area, and map the assigned ID to the selected piece of key information. After completion of the key-to-key area mapping, the control unit 110 can store the mappings between the IDs assigned to the key areas and the key information in the storage unit 120 as a key information set 125. In addition, the configuration of key areas of the second display field 137 can be set by the user. For example, in response to a request for a setting of key areas from the user, the control unit 110 may display the key areas. The control unit 110 can change the arrangement of the key areas, and change soft keys mapped to a key area according to the user's selection. It should be understood that key information set 125 may, in general, be set and stored in any suitable manner.

Referring to TABLE 2, multiple keys can be mapped to a particular key area (e.g., key areas ID 1 to ID 7 in FIG. 5B). In general, keys of any keypad-based input scheme can be mapped to key areas of the touch screen 130, and an application employing an existing keypad-based input scheme may be executable on the mobile terminal having the touch screen 130 through a touch-based input scheme.

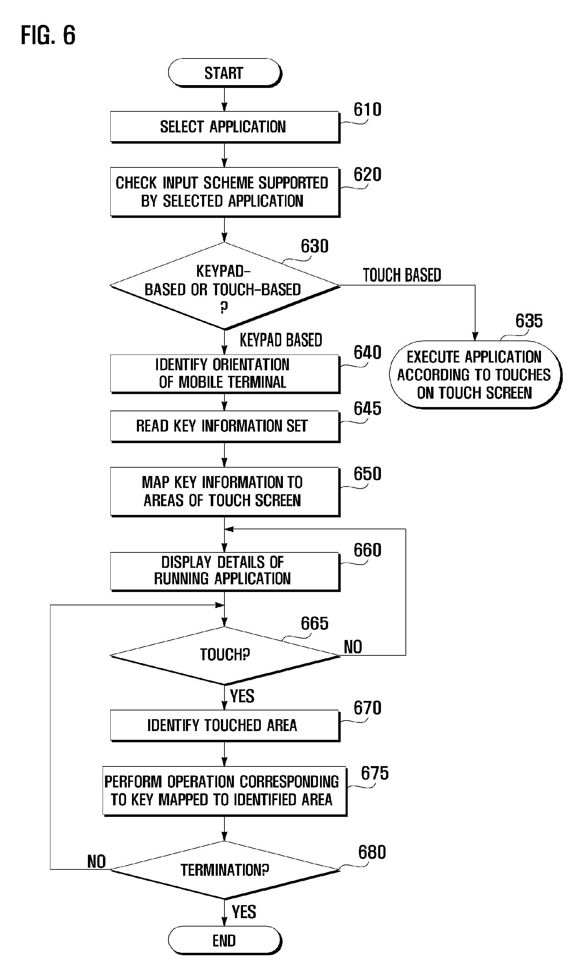

FIG. 6 is a flow chart illustrating a touch-based key input method according to exemplary embodiments of the present invention.

Referring to FIG. 6, when an application is selected through a menu or function key (S610), the control unit 110 may check the input scheme of the selected application (S620). The input scheme supported by an application may be determined through a particular property of the application. That is, the control unit 110 can check a given property of the selected application to determine whether the supported input scheme is a keypad-based input scheme or a touch-based input scheme. The application may be any application that can be executed on a mobile terminal such as programs related to gaming, document composition, and/or the Internet.

If the supported input scheme is a touch-based one (S630), the control unit 110 may execute the application according to touches detected on the touch screen 130 (S635). If the supported input scheme is a keypad-based one, the control unit 110 may identify the orientation of the mobile terminal through the orientation detector 140 (S640). The control unit 110 may read a key information set 125 corresponding to the identified orientation from the storage unit 120 (S645). In some cases, step S645 may be skipped. For example, a key information set 125 may be read without identification of the terminal orientation, and may be replaced with another key information set 125 during application execution upon detection of an orientation change through the orientation detector 140.

The control unit 110 may map key information of the key information set 125 to individual key areas of the touch screen 130 (S650). For example, when a key information set 125, as shown in TABLE 1, is applied to the mobile terminal as shown in FIG. 2, the control unit 110 may map the 'up' key, 'left' key, 'right' key, and 'down' key to key area ID 4, key area ID 5, key area ID 6, and key area ID 7, respectively.

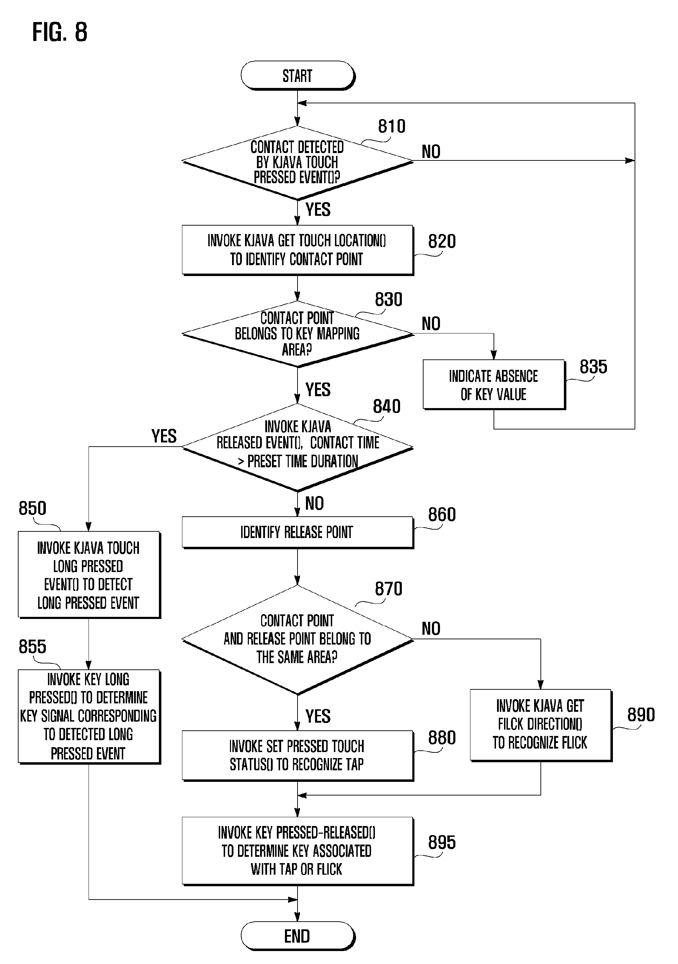

The control unit 110 may then display details of the running application on the touch screen 130 (S660). The control unit 110 may determine whether a touch is detected on the touch screen 130 (S665). If a touch is detected, the control unit 110 may identify the touched key area (S670), and may determine the key mapped to the identified key area and perform an operation corresponding to the determined key (S675). For example, if a game application employing a keypad-based input scheme is being executed as shown in FIG. 2, and key area ID 6 is touched, the control unit 110 can identify the touched key area ID 6 and perform an operation according to the 'right' key mapped to key area ID 6. A procedure for detecting a touch on the touch screen 130 is described further in connection with FIG. 8.

The control unit 110 may check whether a termination request for the application is issued (S680). If a termination request is not issued, the control unit 110 may return to step S665 and may continue detection of a touch, and related processing. If a termination request is issued, the control unit 110 may terminate execution of the application. A termination request may be made through a menu or an input at the 'End' button in the touch screen 130.

In addition, as described above, when an application employing a keypad-based input scheme is selected, the control unit 110 may identify an orientation of the mobile terminal and may read a key information set 125 corresponding to the identified orientation from the storage unit 120. When the orientation of the mobile terminal changes during execution of the application, the control unit 110 can re-identify the orientation of the mobile terminal through the orientation detector 140. The controller unit may then read another key information set 125 corresponding to the new orientation and may map key information of the read key information set 125 to the corresponding key areas of the touch screen 130. Hence, the control unit 110 can continue execution of a mobile terminal application even if the mobile terminal orientation changes during execution.

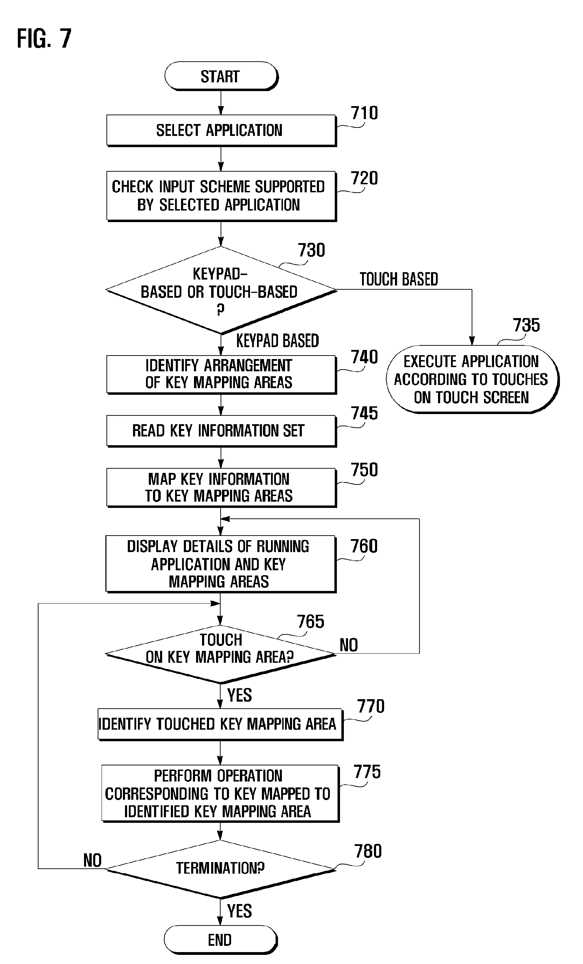

FIG. 7 is a flow chart illustrating another touch-based key input method according to exemplary embodiments of the present invention.

Referring to FIG. 7, when an application is selected through a menu or function key (S710), the control unit 110 may check the input scheme of the selected application (S720). The control unit 110 can check a given property of the selected application to determine whether the supported input scheme is a keypad-based one or touch-based one. The application may be any application executable on the mobile terminal, such as, for example, programs related to gaming, document composition, and/or the Internet.

If the supported input scheme is a touch-based one (S730), the control unit 110 may execute the application according to touches detected on the touch screen 130 (S735). If the supported input scheme is a keypad-based one, the control unit 110 may demarcate the touch screen 130 into a first display field 135 for application details and a second display field 137 for key mapping areas, and may identify an arrangement of the key mapping areas (S740). The control unit 110 may read a key information set 125 corresponding to the identified arrangement from the storage unit 120 (S745), and may map key information of the key information set 125 to corresponding key areas (S750).

The control unit 110 may display details of the running application on the first display field 135, and may display the key areas on the second display field 137 (S760). The control unit 110 may determine whether a touch is detected on a key area of the touch screen 130 (S765). If a touch is detected, the control unit 110 may identify the touched key area (S770), determine the key mapped to the identified key area, and perform an operation corresponding to the determined key (S775).

For example, as shown in FIG. 5B, a game application may be running on the first display field 135 and key areas may be displayed on the second display field 137. The control unit 110 may read key information set 125 corresponding to the mobile terminal configuration shown in FIG. 5B from the storage unit 120, and may map key information of the key information set 125 to the individual key areas in FIG. 5B. During execution of the application, the control unit 110 may check whether a touch is detected on the touch screen 130. When a touch is detected on key area ID 1, the control unit 110 may identify the 'up' key mapped to the touched key area ID 1, and can perform an operation corresponding to the identified key. A procedure for detecting a touch on the touch screen 130 is described further in connection with FIG. 8.

The control unit 110 may check whether a termination request for the application is issued (S780). If a termination request is not issued, the control unit 110 may return to step S765 and may continue detection of a touch and related processing. If a termination request is issued, the control unit 110 may terminate execution of the application. A termination request may be made through a menu or an input of the 'End' button in the touch screen 130.

FIG. 8 is a flow chart illustrating a procedure of recognizing a key signal from a touch detected on the touch screen 130 according to exemplary embodiments of the present invention. It should be understood that touch detection on a touch screen may be performed in various ways. The following description is given, by way of example, for a Java application.

Referring to FIG. 8, the control unit 110 may invoke a KJavaPressedEvent() function to detect contact between a mobile terminal user's finger and/or a stylus pen and the touch screen 130 (S810). If a contact is detected, the control unit 110 may invoke a KJavaGetTouchLocation() function to identify the contact point (S820), and may determine whether the contact point belongs to a key area (S830). If the contact point does not belong to a key area, the control unit 110 can display a popup indicating absence of a key value on the touch screen 130 or can ignore the detected contact and remain idle (S835).

If the contact point belongs to a key area, the control unit 110 may invoke a KJavaReleasedEvent() function to determine whether the contact is sustained longer than or equal to a preset time duration (S840). The time duration may be set during the manufacturing process or by the user. If the contact is sustained longer than or equal to the time duration, the control unit 110 may invoke a KJavaTouchLongPressedEvent() function to detect a long pressed event (S850). The control unit 110 may invoke a KeyLongPressed() function to determine a key signal corresponding to the detected long pressed event, and may perform an operation necessary for the determined key signal (S855).

If the contact is not sustained longer than or equal to the time duration at step S840, the control unit 110 may identify a release point (S860). The control unit 110 may determine whether the contact point and the release point belong to the same key area (S870). If the contact point and the release point belong to the same key area, the control unit 110 may invoke a SetPressedTouchStatus() function to regard the contact and release as a tap (S880). If the contact point and the release point do not belong to the same key area, the control unit 110 may invoke a KJavaGetFilckDirection() function to regard the contact and release as a flick (S890) and determine a direction of the flick. After identification of the touch type at step S880 or S890, the control unit 110 may invoke a KeyPressed-Released() function to determine a key associated with the tap or flick (S895). Determination of the direction of a flick has been described in connection with FIG. 4.

Accordingly, the control unit 110 can execute an application employing a keypad-based input scheme utilizing keys mapped to key areas by detecting touches and identifying touch types. It should be understood that functions described and illustrated in the above description are only for illustrative purposes, do not limit the present invention, and may vary based on several factors including, for example, a type of application or programming language being used.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents

## Claims

1. A touch-based key input method for a mobile terminal having a touch screen, the method comprising:
checking, when an application is selected, an input scheme supported by the selected application;
reading, when the supported input scheme is a keypad-based input scheme, a stored key information set;
mapping key information to one or more areas of the touch screen using the read key information set;
detecting a touch on one of the areas during execution of the selected application;
determining a key mapped to the touched area; and
performing an operation corresponding to the determined key.

2. The touch-based key input method of claim 1, wherein reading a stored key information set comprises:
identifying an orientation of the mobile terminal; and
reading a stored key information set corresponding to the identified orientation.

3. The touch-based key input method of claim 1, wherein mapping key information to one or more areas comprises displaying icons corresponding to the key information at the one or more areas.

4. The touch-based key input method of claim 1, further comprising:
detecting a change in an orientation of the mobile terminal during execution of the selected application;
reading a second key information set corresponding to the changed orientation; and
mapping key information to the one or more areas of the touch screen using the read second key information set.

5. The touch-based key input method of claim 1, wherein reading a stored key information set comprises:
demarcating the touch screen to display details of the selected application on a first display field of the touch screen and to arrange the one or more areas in a second display field of the touch screen; and
reading the stored key information set corresponding to the arrangement of the one or more areas.

6. The touch-based key input method of claim 5, wherein detecting a touch on one of the one or more areas comprises detecting the touch on the second display field.

7. The touch-based key input method of claim 1, wherein the application is one of a game application, a document composition application, and an Internet application.

8. A mobile terminal, comprising:
a touch screen to display application details and to sense a touch;
a storage unit to store applications and key information sets comprising mappings of key areas of the touch screen to key information; and
a control unit configured to:
check, when an application is selected, an input scheme supported by the selected application;
read, when the supported input scheme is a keypad-based input scheme, a key information set of the key information sets;
map the key information to the key areas of the touch screen using the read key information set;
determine, upon detection of the touch of a key area of the touch screen, a key mapped to the touched key area; and
perform an operation corresponding to the determined key.

9. The mobile terminal of claim 8, wherein the control unit identifies an orientation of the mobile terminal and reads a key information set corresponding to the identified orientation from the storage unit.

10. The mobile terminal of claim 8, wherein the control unit instructs the touch screen to display icons corresponding to the key information associated with the key areas.

11. The mobile terminal of claim 8, wherein the control unit detects, during execution of the selected application, a change in an orientation of the mobile terminal, reads, upon detection of the change in the orientation, a second key information set corresponding to the changed orientation, and maps second key information to the key areas of the touch screen utilizing the read second key information set.

12. The mobile terminal of claim 8, wherein the control unit demarcates the touch screen to display details of the selected application in a first display field of the touch screen and to arrange the key areas in a second display field of the touch screen, and reads the key information set corresponding to the arrangement of the key areas from the storage unit.

13. The mobile terminal of claim 12, wherein the control unit displays the key areas on the second display field, and detects the touch on the second display field.

14. The mobile terminal of claim 8, wherein the selected application is one of a game application, a document composition application, and an Internet application.
